(19)

Europäisches
Patentamt
European
Patent Office
Office européen
des brevets

(11) **EP 2 449 834 B1**

(12) **EUROPEAN PATENT SPECIFICATION**

(45) Date of publication and mention
of the grant of the patent:
**04.08.2021 Bulletin 2021/31**

(21) Application number: **09846918.2**

(22) Date of filing: **01.09.2009**

(51) Int Cl.:
***H04W 64/00*** (2009.01)    ***G01S 5/02*** (2010.01)

(86) International application number:
**PCT/SE2009/050985**

(87) International publication number:
**WO 2011/002372 (06.01.2011 Gazette 2011/01)**

(54) **TDOA-BASED RECONSTRUCTION OF BASE STATION LOCATION DATA**

AUF TDOA BASIERENDE REKONSTRUKTION VON BASISSTATIONSSTANDORTDATEN

RECONSTRUCTION À BASE DE TDOA DE DONNÉES DE LOCALISATION DE STATION DE BASE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **29.06.2009 US 493323**

(43) Date of publication of application:
**09.05.2012 Bulletin 2012/19**

(73) Proprietor: **Telefonaktiebolaget LM Ericsson
(publ)
164 83 Stockholm (SE)**

(72) Inventor: **ZHANG, Yang
Shanghai 200135 (CN)**

(74) Representative: **Zacco Sweden AB
Valhallavägen 117
Box 5581
114 85 Stockholm (SE)**

(56) References cited:
**WO-A1-02/23215          WO-A1-02/23215
WO-A1-2009/065012        WO-A2-03/010552
WO-A2-03/010552          WO-A2-2007/056738
WO-A2-2008/093103        US-A1- 2005 064 876
US-A1- 2005 288 033      US-A1- 2006 009 235
US-A1- 2008 085 699      US-A1- 2008 318 596
US-A1- 2009 131 075**

• **KELLEY B. ET AL: 'OFDM Location-Based
Routing Protocols in Ad-Hoc Networks'
WIRELESS HIVE NETWORKS CONFERENCE,
2008. WHNC 2008. IEEE 2008, pages 1 - 5,
XP031324164**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates generally to wireless communications systems, and more particularly to techniques and systems for determining the location of a base station transceiver node in a wireless communication system.

### BACKGROUND

Mobile station positioning has become increasingly important, not only for supporting enhanced emergency calling (e.g., E-911 in the United States), but also for supporting commercial location-based services. Although several technologies for determining the location of wireless mobile stations have been deployed, a technique called Observed Time-Difference of Arrival (OTDOA) is widely used in modern cellular telecommunications networks.

With the OTDOA technique, a mobile station's location can be determined based on measurements of the following parameters: (1) time-difference-of-arrival (TDOA) measurements of downlink radio signals received at a mobile station from several base stations; (2) actual relative time differences (RTDs) between the transmissions of pairs of base stations, at the time when the TDOA measurements are made; and (3) geographical positions (e.g., latitude and longitude) of the several base stations. Measurements using downlink signals from at three different base stations are required. The accuracy of each of these measurements contributes to the overall accuracy of the position estimate. However, more TDOA measurements bring better accuracy.

There are several approaches to determining the real time difference for a pair of base stations. One technique involves transmissions from base stations that are synchronized to one another. In this case the RTD for any given pair of base stations is a known constant value that may be stored in a database and used by the positioning function when making a position estimate based on TDOA measurements for that base station pair. For optimal accuracy, the synchronization should be done to a level of accuracy on the order of tens of nanoseconds, as only ten nanoseconds of uncertainty contributes 3 meters of error to the position estimate. Drift and jitter in the synchronization timing must also be well controlled, as these also contribute to uncertainty in the position estimate. Currently, synchronization to this level of accuracy is currently only readily available through satellite-based time transfer techniques. Base stations in systems employing a time-division duplexing (TDD) operating mode are often synchronized.

Alternatively, base stations may be left to run "free," within some constraint on the maximum frequency error allowed in the system. In this scenario, the RTD will change over time, although usually slowly, given tight frequency accuracy specifications for the controlling reference clocks. The rate of change will depend on the frequency differences between the reference clocks for a given pair of base stations, as well as on the jitter associated with each clock.

The OTDOA positioning technique may be applied in at least two modes: UE-assisted OTDOA and UE-based OTDOA. ("UE", or "User Equipment", is a term used in standards promulgated by the 3rd Generation Partnership Project to refer to end-user wireless communication devices. As used herein, the terms "UE," "mobile station," and "mobile terminal" are equivalent, and are intended to generally refer to an end-user wireless communication device, whether portable or fixed, or whether self-contained or built into another device such as a personal computer or an automobile. These terms are thus intended to encompass, without limitation, machine-to-machine devices as well as handheld mobile phones). These two modes differ in where the actual position calculation is carried out. In the UE-assisted mode, the mobile station measures the TDOA of several cells and sends the measurement results to the network, where a positioning node (e.g., a location server) carries out the position calculation. In the UE-based mode, on the other hand, the mobile station makes the measurements and carries out the position calculation as well. To perform UE-based positioning, the mobile station clearly requires additional information, such as the position of the measured base stations and the timing relationships among the base stations.

OTDOA has been standardized by 3GPP for GSM/EDGE Radio Access Networks (GERAN) as well as for UMTS Radio Access Network (UTRAN). (In the former specification, the technique is referred to as Enhanced Observed-Time-Difference, or E-OTD). Standardization in 3GPP of positioning techniques for Evolved UTRAN (E-UTRAN) is still ongoing, but OTDOA has already been widely accepted as a very important positioning method. In fact, some U.S. operators have begun planning for OTDOA deployment in Long Term Evolution (LTE) networks in about 2010 or 2011. Moreover, it is also very clear that OTDOA-related protocols in E-UTRAN will soon be adopted by the Open Mobile Alliance (OMA) as a basis for so-called User Plane positioning. As a result, OTDOA-based positioning techniques are continuing to grow in importance.

International Patent Application No. WO 2007/056738 A2 describes a method for positioning access points and terminals in WLANs and other wireless networks. More specifically, an observed time difference, OTD, measurement is taken by a terminal (or multiple terminals), such as a mobile station, between two access points that communicate with the terminal. Based on the OTD measurements, the locations of the access points are determined from the terminal or multiple terminals, with known locations. Further, US Patent Application No. 2006/009235 A1 describes a method and an apparatus for determining a position of a base station in a wireless communication network that includes a plurality of mobile stations in communication with one or more base stations. Furthermore, US Patent Application No. 2009/131075 A1 describes a method for locating an unknown base station or Node B, having a plurality of nodes, using measurement reports and for generating location determining hyperbolas by combining a user equipment (UE) measurement report with location measurement unit (LMU) measurements.

## SUMMARY

The invention is set out in the appended set of claims. Information specifying the location of all base stations in a given wireless network is of great interest to service providers that wish to provide location-based services. However, this information generally is available only to the operators of the wireless networks. Therefore, even if a location-based services provider has access to TDOA measurements from a given mobile station, services providers have previously been unable to use those measurements to determine the mobile station's location without cooperation from the wireless network's operator. Thus, techniques for determining accurate estimates of base station locations that do not require access to the wireless network's control plane signaling are needed.

Disclosed herein are various methods and apparatus for determining a position estimate for a base station transceiver node in a wireless communication system. Generally speaking, these methods and apparatus exploit time-difference-of-arrival (TDOA) measurements performed by mobile stations for which geographic locations are already known. By combining these known locations with the TDOA measurements, an estimated base station position can be computed. This estimated base station position may be used, for example, in subsequent positioning of mobile stations for which locations are not already known (e.g., mobile stations not equipped with GPS technology). The estimated base station position may also be used to update a database of base station coordinates for the wireless network.

An exemplary method performed by a position-estimating node, according to some embodiments of the invention, comprises maintaining a database of time-difference-of-arrival, TDOA, measurements stored along with corresponding known positions for measuring mobile stations, wherein each TDOA measurement involves a pair of base station transceiver nodes, and wherein the database being built by performing a mobile station assisted observed time-difference-of-arrival, OTDOA, procedures in parallel or in sequence with A-GPS and / or GPS-based positioning requests; evaluating the database of TDOA measurements to identify a subset of TDOA measurements involving the first base station transceiver node, wherein the subset of TDOA measurements is taken within a time window of a predetermined duration;

evaluating the subset of TDOA measurements to identify a second base station transceiver node by determining that the second base station transceiver node is involved in at least as many of the identified subset of TDOA measurements involving the first base station transceiver node as any other base station transceiver node;

computing an estimated position for the first base station transceiver node as a function of the corresponding known positions for the measuring mobile stations and the measurement of the subset of TDOA measurements involving the second base station transceiver node, wherein if no suitable subset of TDOA measurements meeting the time window of the predetermined duration is identified, sending positioning requests to several mobile stations in vicinity of the first base station transceiver node; and

storing in a database of base station positions the estimated position for the first base station transceiver node.

In some embodiments, the first subset of TDOA measurement data is obtained from at least five mobile stations, and computing the estimated position for the first base station transceiver node comprises solving a system of equations based on the first mobile station location data, the first subset of TDOA measurement data, and five unknown variables. These five unknown variables comprise first and second coordinate values for the first base station transceiver node, first and second coordinate values for the second base station transceiver node, and a first real-time-difference value corresponding to a time offset between transmissions from the first and second base station transceiver nodes. In some of these embodiments, solving the system of equations comprises computing estimates for the five unknown variables using an iterative least squares algorithm.

In addition to the disclosed methods for estimating base station positions, corresponding apparatus are also disclosed. In particular, position-estimating nodes configured to carry out one or more of the techniques summarized above are described. The present invention may, of course, be carried out in other ways than those specifically set forth herein without departing from essential characteristics of the invention. Upon reading the following description and viewing the attached drawings, the skilled practitioner will recognize that the described embodiments are illustrative and not restrictive, and that all changes coming within the scope of the appended claims are intended to be embraced therein.

## BRIEF DESCRIPTION OF THE DRAWINGS

Fig. 1 is a system schematic illustrating an exemplary location services network architecture.

Fig. 2 illustrates a location procedure using control plane signaling.

Fig. 3 illustrates a positioning procedure using control plane signaling.

Fig. 4 is a process flow diagram illustrating an exemplary method for determining a position estimate for a base station.

Fig. 5 is another process flow diagram illustrating a method for estimating a base station location

Fig. 6 illustrates another exemplary method for estimating a base station location

Fig. 7 illustrates yet another exemplary method for estimating a base station location.

Fig. 8 is a block diagram illustrating a positioning node according to some embodiments of the invention.

Fig. 9 illustrates time-difference-of-arrival positioning of a mobile station.

Fig. 10 illustrates a network scenario for estimating the locations of two base stations.

## DETAILED DESCRIPTION

As discussed above, precise location information for base stations in a wireless network is needed to perform TDOA-based positioning of mobile stations. Because location-based services are increasingly of interest to commercial service providers, many parties are interested in performing mobile station positioning. As a result, information specifying the location of all base stations in a given wireless network is of great interest to these parties. However, this information generally is available only to the operators of the wireless networks - access to this cell data is not straightforward for service providers. Therefore, even if a location-based services provider has access to TDOA measurements from a given mobile station, the services provider is unable to use those measurements to determine the mobile station's location without cooperation from the wireless network's operator.

In a related co-pending U.S. patent application, Serial No. 12/486,350, filed 17 June 2009, techniques are disclosed for estimating a base station's position based on angle-of-arrival and/or timing advance measurements made by the base station. A service provider operating from outside of the wireless network of interest is unlikely to have access to this measurement data - thus additional techniques for determining an estimate of an unknown geographic position for a base station transceiver are needed.

The Open Mobile Alliance™, a telecommunications industry forum developing standards for mobile data services, is currently developing specifications for so-called Secure User Plane Location (SUPL) technology. SUPL is intended to provide a supporting technology for Location-Based Services that are agnostic with respect to the radio access technologies underlying the supported wireless communications networks, and operates using IP (Internet Protocol) communications rather than telecommunications-based messaging and signaling. From a user point of view, a SUPL system consists primarily of a server and a SUPL-enabled mobile station - the server and mobile station interact at the network layer and thus require minimal interaction with nodes deep inside the wireless network.

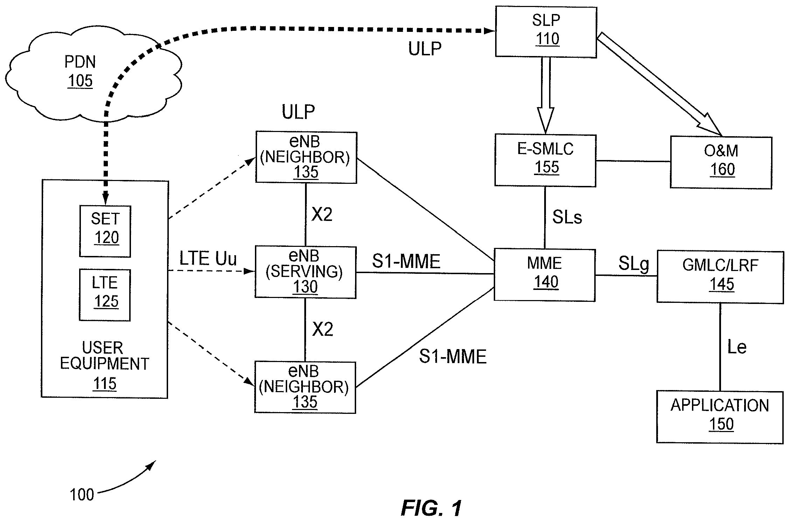

Figure 1 is a network block diagram illustrating components of an LTE network (3GPP E-UTRAN) 100 augmented with a SUPL Location Platform (SLP 110). The SLP 110 may be controlled by the network operator, in some instances, or by a third-party services provider, in others. In either case, as will be shown below, the inventive techniques disclosed herein may reduce the dependency the SLP 110 has on the LTE network elements.

A mobile station, or user equipment (UE) 115 includes an LTE function 125 for communicating with the serving LTE base station (evolved Node B, or "eNB") 130. Mobile station 115 is also configured with an "SUPL-Enabled Terminal" (SET) function 120, for communicating with the SLP 110. These latter communications are at the user plane level, using IP, and are thus illustrated with a heavy dashed line passing between UE 115 and SLP 110, through packet data network (PDN) 105. The details of implementing a SET-equipped LTE handset are well known to those of ordinary skill in the art, as are the details of the other various LTE network components illustrated in Figure 1, and are unnecessary to a complete understanding of the present invention. These details are therefore not described further herein. However, further information regarding SUPL and LTE positioning may be obtained by consulting the 3GPP specification 3GPP TS 23.271, "Functional stage 2 description of location services" and the OMA specification "Secure User Plane Location Architecture", Open Mobile Alliance, OMA-AD-SUPL-AD-V2_0.

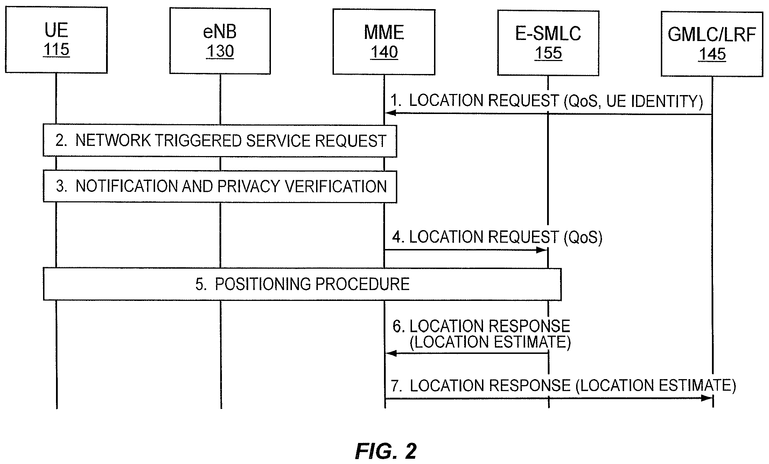

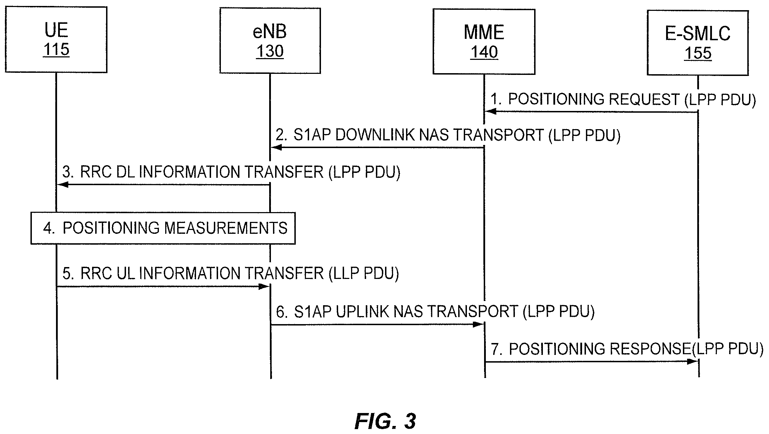

On the other hand, an understanding of the overall network operation in the context of LTE positioning operations may be helpful in understanding the inventive techniques disclosed herein. Thus, Figure 2 illustrates the control plane signaling associated with a general positioning procedure in an LTE network like the one pictured in Figure 2, where the positioning procedure is initiated by a Gateway Mobile Location Center/Location Retrieval Function (GMLC/LRF) 145. In this case, a mobile station's location may have been initiated by a network operator-based service, such as via application 150 in Figure 1. Figure 3 provides additional details of one possible solution for the positioning procedure between the Evolved Serving Mobile Location Center (E-SMLC) 155 and the UE 115, in this case using OTDOA measurements. In addition to being part of the overall LTE positioning procedure of Figure 2, this procedure may be initiated via the SLP 110, in response to a request from any SET-equipped client device.

Referring to Figure 2 (with the network block diagram of Figure 1 in mind), the illustrated procedure may be summarized as follows:

1. The GMLC 145 sends a location request to the serving Mobility Management Entity (MME) 140, indicating a UE identity and a required quality-of-service (QoS). For a commercial mobile-terminating location request (MT-LR), UE privacy preferences are also included (as currently supported for GSM and UMTS). Note that the MME 140 will already know the UE positioning capabilities, either from the initial attachment procedure or from a prior MME or SGSN, following changes in tracking area or routing area.

2. If the UE 115 is in ECM-IDLE state, then the MME 140 performs a network triggered service request (as defined in 3GPP TS 23.401) in order to establish a signaling connection with UE 115 and to assign a specific eNB 130. (Note that the serving eNB may retrieve timing and location information for neighbor eNB's 135 via the X2 interface.

3. For a commercial MT-LR, the MME 140 may notify the UE 115 concerning the location request and verify its privacy, provided that the UE 115 supports notification and privacy verification.

4. The MME 140 forwards the location request to the E-SMLC 155, including the QoS and UE positioning capabilities. The UE identity will not be critical because the MME 140 can maintain the association with the UE 115.

5. The E-SMLC 155 performs a positioning procedure appropriate to the particular QoS, architecture and UE capabilities. The details of this procedure using OTDOA measurements are shown in Figure 3.

6. The E-SMLC 155 returns the resulting location information (e.g., location estimate) to the MME 140.

7. The MME 140 returns the location information to the GMLC 145.

Referring now to Figure 3 (again with the block diagram of Figure 1 in mind), details of the positioning procedure between E-SMLC 155 and UE 115 are illustrated. (Because the positioning protocols in LTE are still undergoing standardization, the final procedures may differ from this diagram. Nevertheless, the illustrated procedure is still instructive). This procedure may be summarized as follows:

1. The E-SMLC 155 sends a Positioning Request to the MME 140, the Positioning Request carrying an LTE Positioning Protocol (LPP) Protocol Data Unit (PDU). The LPP PDU may request specific measurements by the UE 155, provide assistance data, or query for the UE capabilities. For OTDOA positioning in particular, E-SMLC 115 may request cell ID, base station timing, and base station location information from eNB 130 or from O&M server 160.

2. The MME 140 forwards the LPP PDU to the serving eNodeB 130 in an S1AP Downlink NAS Transport message, thereby making the contents of the LPP PDU transparent to the both the MMS 140 and eNodeB 130. The MME need not retain state information for the positioning request, as it can treat the subsequent response (see step 6 below) as a separate transaction. However, it must retain state information associated with the location request from the GMLC 145 (step 1 of Figure 2) and the location request to the E-SMLC 155 (step 4 of Figure 2).

3. The serving eNodeB 130 forwards the LPP PDU to UE 115 in an RRC Downlink Information Transfer message.

4. UE 115 performs any positioning measurements requested by the LPP PDU. In OTDOA-based positioning procedures in particular, UE 115 measure the time-difference-of-arrival between each pair of base stations among those base stations identified by E-SMLC 155 in earlier messages.

5. UE 115 returns measurement information and/or information concerning its capabilities or requested assistance data in an LPP PDU to the eNodeB 130, using an RRC Uplink Information Transfer message.

6. eNodeB 130 forwards the LPP PDU to the MME 140 in an S1AP Uplink NAS Transport message.

7. MME 140 forwards the LPP PDU to the E-SMLC 155 in a Positioning Response.

Steps 1 to 7 may be repeated to send new assistance data and request further measurements.

As seen in Figures 2 and 3, extensive control plane signaling is used in a conventional LTE positioning procedure. With user plane positioning, such as is enabled by SUPL, the signaling is simpler. (Note that user plane flow can be used not only in LTE, but also other access types).

In particular, the architecture of the user plane is much simpler than in control plane. Normally only two nodes (SLP and SET) are involved, as in Fig1, communicating with one another through a Userplane Location Protocol (ULP) over an IP connection. The LTE Positioning Protocol (LPP) can be "borrowed" by ULP messages, providing payload for positioning messaging. For OTDOA-based positioning, SLP 110 can request and/or retrieve network-specific information, such as the serving and neighbor base station timing and base station locations, from E-SMLC 155 or O&M server 160. With this conventional approach, even if SLP 110 is able to obtain TDOA measurement data directly from UE 115, via the Userplane Location Protocol, the SLP 110 is still dependent on the network and its control plane signaling for network-specific information. The inventive techniques disclosed herein may be used to relieve the SLP 110 of this dependency.

Using these techniques, TDOA measurements obtained from mobile stations for which a position is already known (such as via GPS-based positioning) may be utilized to determine base station positions. With these techniques, a database of base station locations can be constructed (or reconstructed, since such a database is likely already maintained by the network operator.) As will be seen in the detailed discussion that follows, an unknown base station can be estimated with as few as three TDOA measurements performed by mobile stations at different locations. The accuracy of the base station position estimates can be improved with an increase in the number of measurements used.

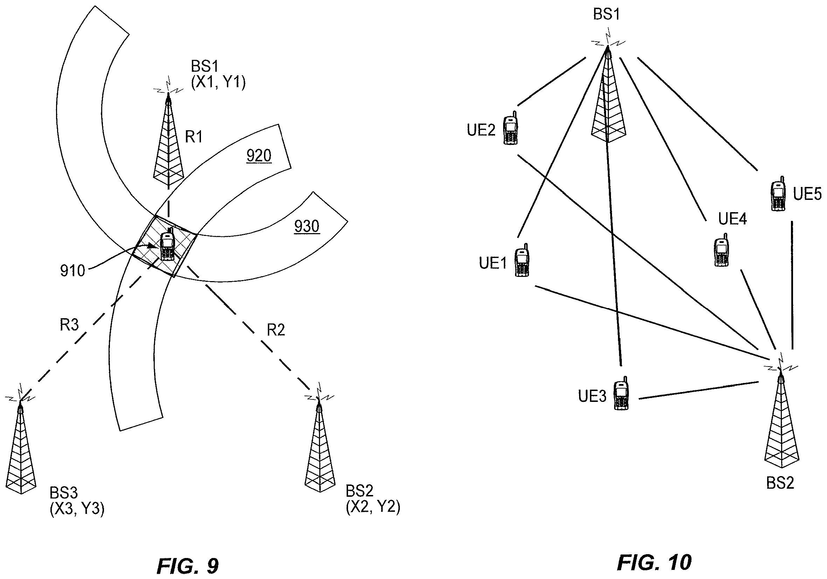

The basic principles of mobile station positioning using OTDOA are described first, to provide a basis for understanding the detailed operation of the inventive methods and apparatus for determining a base station's position. Figure 9 illustrates a simple network, including a single mobile station 910 that is able to "hear" transmissions from three base stations, BS1, BS2, and BS3. These base stations have location coordinates $(x_i, y_i)$, for $i$ = 1,2,3, while mobile station 910 has a position denoted by coordinates $(x_{UE}, y_{UE})$. (Those skilled in the art will recognize that the details of the coordinate system are unimportant - a variety of coordinate systems, including the World Geodetic System, may be used. In the discussion that follows, it is assumed that only two-dimensional coordinates are needed. Of course, the techniques disclosed herein can readily be extended to three-dimensional positioning, although OTDOA positioning based on terrestrial base stations may generally suffer from large uncertainties in altitude determinations).

Mobile station 910 measures the observed time-differences-of-arrival (OTDOAs) $\Delta t_{12}$ and $\Delta t_{13}$, corresponding to the observed time differences (at the mobile station) between base stations 1 and 2, and between base stations 1 and 3, respectively. A network function either measures or is able to ascertain the corresponding real time differences (RTDs) $RTD_{12}$ and $RTD_{13}$ between these same pairs of base stations. The relationship between all of these parameters is given by:

$$\sqrt{(x_{UE} - x_1)^2 + (y_{UE} - y_1)^2} - \sqrt{(x_{UE} - x_2)^2 + (y_{UE} - y_2)^2} = (\Delta t_{12} - RTD_{12} + n_{12}) * c$$
$$\sqrt{(x_{UE} - x_1)^2 + (y_{UE} - y_1)^2} - \sqrt{(x_{UE} - x_3)^2 + (y_{UE} - y_3)^2} = (\Delta t_{13} - RTD_{13} + n_{13}) * c \qquad , \quad (1)$$

where $n_{ij}$ denotes TDOA measurement errors and c is speed of light.

The expressions in Equation (1) generally define two intersecting hyperbolas; the uncertainty introduced by the noise terms $n_{ij}$ results in the hyperbolic strips 920 and 930 illustrated in Figure 9. The actual position $(x_{UE}, y_{UE})$ of UE 910 falls within the region defined by the intersection of hyperbolic strips 920 and 930 (indicated by cross-hatching). This position can be estimated by solving these nonlinear equations. Various approaches to solving this problem are well known - one approach uses Taylor-series linearization, followed by the use of an iterative Least Square algorithm to produce a solution from the linearized equation set. Those skilled in the art will appreciate that additional TDOA measurements for a fourth (and further) base stations may be used to extend the optimization problem presented by Equation (1) - the use of additional measurements will generally improve the accuracy of the UE position estimate.

As is apparent from this description of OTDOA-based positioning of mobile stations, accurate base station positions $(x_i, y_i)$ must be known. This is true regardless of whether the calculation is performed by the mobile station itself (UE-based OTDOA) or not (UE-assisted OTDOA). However, since network operators will not necessarily freely disclose this proprietary base station location information to third parties, the availability of accurate base station location data can be a bottleneck for service providers who do not have a direct relationship with a network operator. This bottleneck can frustrate the widespread deployment of location-based services based on user plane signaling. Therefore, a solution for building a database of base station locations, without support from the network operator, is highly desirable. Once assembled, this base station location database can be used for OTDOA-based mobile station position, as well as for other mobile positioning technologies such as AGPS/AGNSS and Cell ID based positioning.

The principle behind an exemplary method for determining position estimates for base station transceivers can be demonstrated with reference to Figure 10, which illustrates a pair of base stations BS1 and BS2, and five mobile stations, designated $UE_i$, for $i$ = 1...5. From the perspective of a location-based services server located outside the network to which BS1 and BS2 belong, the locations of BS1 and BS2 $((x_1, y_1)$ and $(x_2, y_2))$ are unknown. However, assume that the location server is able to collect TDOA measurements from mobile stations at each of at least five different positions, as in Figure 10. (These measurements may be made by different mobile stations, or by a single mobile station at five different locations). These OTDOA measurements might be obtained directly from the mobile station, through user plane messaging, thus avoiding the involvement of LTE network elements.

The OTDOA measurement $\Delta t_{UEi}$ from the i-th mobile station (or the mobile station at the i-th position) with respect to BS1 and BS2 then fits equation:

$$r_{UEi\_1} - r_{UEi\_2} = (\Delta t_{UEi} - RTD_{12} + n_{UEi}) * c \qquad (2)$$

or:

$$r_{UEi\_1} - r_{UEi\_2} + RTD_{12} * c = (\Delta t_{UEi} + n_{UEi}) * c \,, \qquad (3)$$

where $r_{UEi\_j}$ is the actual distance between the *i*-th mobile station and the *j*-th base station and:

$$r_{UEi\_1} - r_{UEi\_2} = \sqrt{(x_{UEi} - x_1)^2 + (y_{UEi} - y_1)^2} - \sqrt{(x_{UEi} - x_2)^2 + (y_{UEi} - y_2)^2}. \qquad (4)$$

Further assume that the server can determine accurate position information for the five mobile stations $UE_i$ using other high-accuracy mobile station positioning methods, such as A-GPS or conventional GPS. Therefore, in the case of a synchronized network (where the real time difference corresponding to a TDOA measurement does not depend on the particular time at which the TDOA measurement was made), only five variables in the above equations are unknown: the base station coordinates for BS1 and B2 $(x_1,y_1),(x_2,y_2)$, and the real time difference value $RTD_{12}$. Since five independent TDOA measurements have been made, these five unknown values can be figured out.

For example, given a first guess of $(x_1', y_1', x_2', y_2', RTD_{12}' * c)$ and *n* TDOA measurements ($n \geq 5$), the left side of the equation (3) can be linearized via Taylor-series (ignoring the 2nd and higher order terms) as follows:

$$\begin{aligned} f(x_1, y_1, x_2, y_2, RTD_1 * c) = \\ \sqrt{(x_{UEi} - x_1)^2 + (y_{UEi} - y_1)^2} - \sqrt{(x_{UEi} - x_2)^2 + (y_{UEi} - y_2)^2} + RTD_1 * c \\ \approx f(x_1', y_1', x_2', y_2', RTD_1' * c) + \frac{\partial f}{\partial x_1} \cdot dx_1 + \frac{\partial f}{\partial y_1} \cdot dy_1 + \frac{\partial f}{\partial x_2} \cdot dx_2 \\ + \frac{\partial f}{\partial y_2} \cdot dy_2 + \frac{\partial f}{\partial (RTD_1 * c)} \cdot d(RTD_1 * c) \\ = (r_{UEi\_1}' - r_{UEi\_2}') + RTD_1' * c - (x_{UEi} - x_1') \cdot dx_1 / r_{UEi\_1}' - (y_{UEi} - y_1') \cdot dy_1 / r_{UEi\_1}' \\ + (x_{UEi} - x_2') \cdot dx_2 / r_{UEi\_2}' + (y_{UEi} - y_2') \cdot dy_2 / r_{UEi\_2}' + d(RTD_1 * c) \end{aligned} \qquad (5)$$

Equation (3) can then be rewritten as:

$$\mathbf{Gd} \approx \mathbf{h}, \qquad (6)$$

where:

$$\mathbf{G} = \begin{bmatrix} -\dfrac{(x_{UE1} - x_1')}{r_{UE1\_1}'}, & -\dfrac{(y_{UE1} - y_1')}{r_{UE1\_1}'}, & \dfrac{(x_{UE1} - x_2')}{r_{UE1\_2}'}, & \dfrac{(y_{UE1} - y_2')}{r_{UE1\_2}'}, & 1 \\[2ex] -\dfrac{(x_{UE2} - x_1')}{r_{UE2\_1}'}, & -\dfrac{(y_{UE2} - y_1')}{r_{UE2\_1}'}, & \dfrac{(x_{UE2} - x_2')}{r_{UE2\_2}'}, & \dfrac{(y_{UE2} - y_2')}{r_{UE2\_2}'}, & 1 \\[2ex] \dots\dots \\[2ex] -\dfrac{(x_{UEn} - x_1')}{r_{UEn\_1}'}, & -\dfrac{(y_{UEn} - y_1')}{r_{UEn\_1}'}, & \dfrac{(x_{UEn} - x_2')}{r_{UEn\_2}'}, & \dfrac{(y_{UEn} - y_2')}{r_{UEn\_2}'}, & 1 \end{bmatrix}, \qquad (7)$$

$$\mathbf{d} = \begin{pmatrix} dx_1 \\ dy_1 \\ dx_2 \\ dy_2 \\ d(RTD_1 * c) \end{pmatrix}, \text{ and} \qquad (8)$$

$$\mathbf{h} = c \cdot \begin{pmatrix} \Delta t_{UE1} - (r'_{UE1\_1} - r'_{UE1\_2}) + RTD_1 '* c + n_{UE1} \\ \Delta t_{UE2} - (r'_{UE2\_1} - r'_{UE2\_2}) + RTD_1 '* c + n_{UE2} \\ \cdots\cdots \\ \Delta t_{UEn} - (r'_{UEn\_1} - r'_{UEn\_2}) + RTD_1 '* c + n_{UEn} \end{pmatrix}. \qquad (9)$$

A Least Square solution (ignoring the noise in h) is given by:

$$\mathbf{d} = \left(\mathbf{G}^{\mathrm{T}} \cdot \mathbf{G}\right)^{-1} \cdot \mathbf{G}^{\mathrm{T}} \cdot \mathbf{h}. \qquad (10)$$

If TDOA measurement covariance matrix Q is available, the following solution can be used instead:

$$\mathbf{d} = \left(\mathbf{G}^{\mathrm{T}}\mathbf{Q}^{-1}\mathbf{G}\right)^{-1} \mathbf{G}^{\mathrm{T}}\mathbf{Q}^{-1}\mathbf{h}, \text{ and} \qquad (11)$$

$$\mathrm{cov}(\mathbf{d}) = (\mathbf{G}^{\mathrm{T}}\mathbf{Q}^{-1}\mathbf{G})^{-1}. \qquad (12)$$

In either case, the base station position estimate may be updated for subsequent iterations according to:

$$(x'_1, y'_1, x'_2, y'_2, RTD_1 '* c) = (x'_1, y'_1, x'_2, y'_2, RTD_1 '* c) + \mathbf{d}^{\mathrm{T}}, \qquad (13)$$

and the whole process repeated until the update $\mathbf{d}$ is sufficiently small. The final $(x'_1, y'_1, x'_2, y'_2, RTD_1 '* c)$ represents the position estimates for base stations BS1 and BS2, as well as an estimate of the RTD between the base station pair.

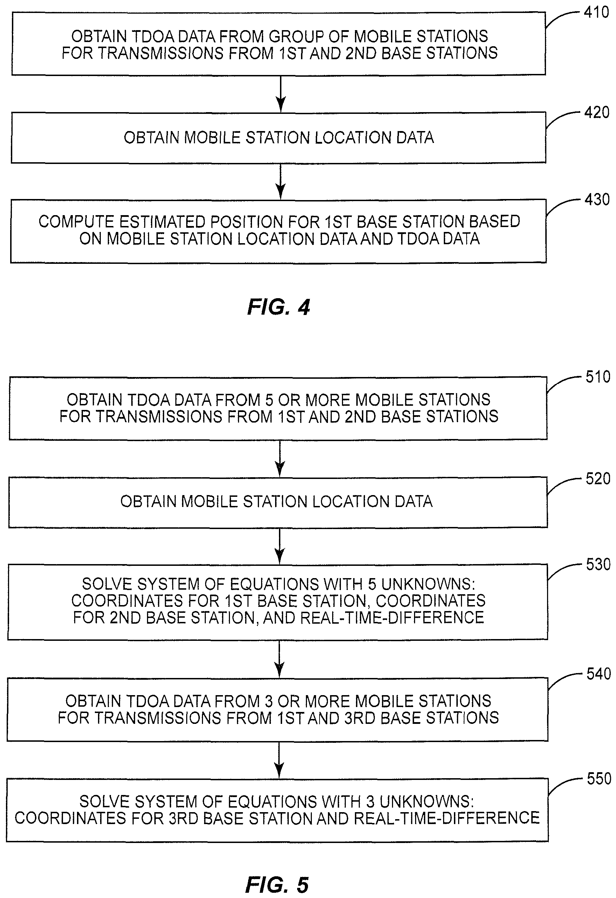

With the above mathematical discussion in mind, those skilled in the art will appreciate that Figure 4 is a process flow diagram that illustrates a general method for determining a position estimate for a base station transceiver node, according to some embodiments of the invention. As shown at block 410, the process begins with the collection of a set of TDOA measurements from a group of mobile stations that are able to receive and make measurements on transmissions from a first base station transceiver node of interest and a second base station transceiver node. Especially if the base stations are operating in a synchronized system, these TDOA measurements may have been obtained ahead of time, i.e., significantly before the base station position estimate is needed by the location server. In other cases, the TDOA measurement may be collected on demand, e.g., by requesting measurements from mobile stations that are known or predicted to be in the vicinity of the first and second base stations. This latter approach may be especially advantageous if the base station transmissions are not synchronized, as the real time difference between the base stations will not remain constant in this case.

At block 420, mobile station location data corresponding to the TDOA measurements is collected. In some embodiments, this location data may be stored in a database along with the TDOA measurements. In other embodiments, the location of a given mobile station may be requested along with a request for the TDOA measurements. Of course, this step assumes that the location of the mobile station is accessible without knowledge of the first and second base station positions. While this may not be possible for all mobile stations, location data may be available for mobile stations that are able to determine their own position, such as by using GPS, A-GPS, GNSS, A-GNSS, or the like. Those skilled in the art will appreciate that assistance data for A-GPS positioning can be generated based on only a rough estimation of the mobile station's location - thus a location server can provide assistance to a properly equipped mobile station without precise base station location information.

As shown at block 430, an estimated position for the first base station is then computed, as a function of the first mobile station location data and the first set of TDOA measurement data. As discussed in detail above, if the first set of TDOA measurement data is obtained from at least five mobile stations, then values for five unknown variables can be estimated, including the coordinates of the first and second base stations and a real time difference value corresponding to a time offset between transmissions from the first and second base station transceiver nodes. This is shown in the more detailed process flow diagram of Figure 5, which illustrates the collection of TDOA data from five or more mobile stations at block 510, the obtaining of corresponding mobile station location data at block 520, and the solving of the resulting system of equations having five unknowns at block 530. In particular, a system of non-linear equations formed from the TDOA observations using the formulations in Equations (2)-(4), for example, may be solved by linearizing the equations and then using an iterative least squares algorithm to find a solution for the linearized equations. Of course, other techniques for solving non-linear systems of equations may also be used.

Once the first (and second) base station positions are estimated, this information can be used to simplify the estimation of positions of subsequent base stations. This is shown at blocks 540 and 550 of Figure 5. At block 540, TDOA data is collected from three or more mobile stations for transmissions received from the first base station (for which a location is now known) and a third base station (for which a location is unknown). Because the coordinates of the first base station are known, a system of equations like the one used before may be formed, but with only three unknowns: first and second coordinate values for the third base station transceiver node, and a real time difference value corresponding to a time offset between transmissions from the first and third base station transceiver nodes. As before, the mobile station locations corresponding to the TDOA measurements must be known.

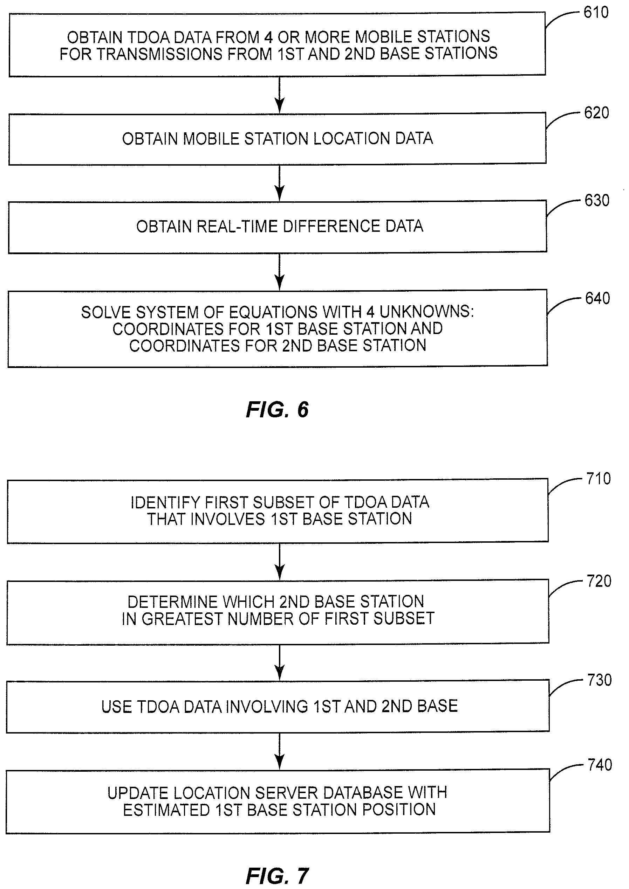

If the real time difference for two base stations of interest is known, then a similar procedure can be performed to estimate the positions of the base stations. In this case, a set of TDOA measurements obtained from four or more mobile stations (or a smaller number of mobile stations, but from at least four locations) may be used, as shown at block 610 of Figure 6. Mobile station location data identifying the mobile station position corresponding to each TDOA measurement in the measurement set is obtained, as shown at block 620, and real-time difference data for the first and second base stations is obtained, as shown at block 630. Given the known mobile station locations, the real-time-difference value for the first and second base stations, and the TDOA measurements from four locations, then a system of equations with four unknowns can be formed, the four unknowns consisting of a first and second coordinate value for the first base station location and a first and second coordinate value for the second base station location.

Although the preceding techniques may be performed using TDOA measurements that are retrieved directly from mobile stations as needed, an alternative approach is to build and/or maintain a database of TDOA measurements, stored along with corresponding known positions for the measuring mobile stations. For example, a location server may be configured to perform UE-assisted OTDOA procedures in parallel or in sequence with A-GPS and/or GPS-based positioning requests, and to store the TDOA measurements along with the results of the other positioning procedure. As noted above, in many situations the location server may provide assistance data as needed, since precise location information for the serving base stations is not needed. Instead, a reference location for the purposes of generating assistance information can be deduced based on a rough location for the mobile station determined from the cell ID and/or the associated Service Area Code (SAC) or Location Area Code (LAC).

Figure 7 thus illustrates an exemplary method for determining an estimated position for a base station transceiver node, given a database of stored TDOA measurements and corresponding mobile station locations. Because each TDOA measurement involves a pair of base stations, there are likely to be a number of TDOA measurements involving the base station of interest (the "first" base station) - each of these may involve one of several neighbor base stations. Thus, as shown at block 710, the process begins with evaluating the database of TDOA measurements to identify a subset of the TDOA measurements that involve the first base station transceiver node. This subset is then evaluated in turn to see which other base station is involved in more of the measurements in the subset than any other, as shown at block 720. In other words, if the number of measurements involving the first base station and any second base station $i$ is designated $N_{1,i}$, then the value of $i$ that maximizes $N_{1,i}$ is found. If, for example, this corresponds to the $k$-th base station, then all or some of the $N_{1,k}$ measurements are used to determine the position of the first base station, as shown at block 730, using the techniques described above. Using all of the measurements will generally provide a better estimate. On the other hand, if more than enough measurements are available, a subset that is expected to be particularly reliable or accurate may be used.

In any case, once the position of the first base station is estimated, the estimated position is stored in a database of base station positions, as shown at block 740, for use in subsequent mobile positioning operations. These steps might be repeated periodically, for a given base station, to ensure that the stored position estimates are based on the most recent and/or most comprehensive set of measurements available. Alternatively, a position estimate for the first base station may be re-calculated upon receiving new OTDOA measurements.

Those skilled in the art will appreciate that the techniques discussed above can be readily applied to base stations in a synchronized network, where the real time difference between a given pair of base stations remains constant. For non-synchronized networks, on the other hand, since RTD is always changing, several approaches can be taken to ensure that the position estimation procedure is accurate. For example, in some scenarios the mobile station may be able to acquire real-time RTD information, using the wireless network's location-related procedures. For example, the mobile station can send a request to the base station, and the base station may collect RTD information from other base stations or the core network and return the information to the requesting mobile station. In some networks, the transfer of this information may be standardized as part of the positioning assistance procedures. The location server in these instances may then in turn collect the RTD information from the mobile station.

For situations in which the RTD information is unavailable from the (unsynchronized) network, the location server may instead impose a time window of a pre-determined duration when selecting TDOA measurements for use in estimating a base station position. This time window ensures that the TDOA measurements are made within a short time of one another, so that the RTD associated with each measurement is relatively constant. In general, if it is assumed that differences between reference frequencies among base stations of interest are limited to R parts-per-million (ppm), then the RTD associated with TDOA measurements involving those base stations will drift no more than $R*T$ microseconds over a window of $T$ seconds. This corresponds to a distance error (for a single worst-case TDOA measurement) of $R*T*c/(1.0\mathrm{x}10^6) = 300*R*T$ meters. If a large number of TDOA measurements are available to the location server, a subset of those measurements that were made during a short time window can be preferentially used as inputs, thus minimizing the impact of radio clock discrepancies. For example, if the drift rate is known to be limited to no more than 0.01ppm, and if the desired accuracy for the base station position estimate is 60 meters or better, then the maximum time window length is 20 seconds. Thus, any group of measurements that fall within any window of 20 seconds duration can be used as inputs for the proposed method.

In still another approach, if a database of prior TDOA measurements is not available, or if no suitable subset of such a database meets the time window limitations described above, then the location server may simultaneously (or quasi-simultaneously) send positioning requests to several mobile stations whose locations are known or expected be in the vicinity of the base station of interest. Although this approach provides for the efficient and timely collection of relevant measurement data, it does require some degree of a priori knowledge of the mobile stations' general locations.

The techniques described above may be implemented by a positioning platform located within the wireless network of interest, tightly coupled to the wireless network (e.g., through proprietary data interfaces), or entirely separate from the wireless network. At a minimum, the positioning platform needs access only to a set of TDOA measurement data from several mobile stations and location data identifying the mobile station position corresponding to each measurement. As discussed above, this information may be available in some scenarios via SUPL-based communications between the positioning platform and the mobile stations, so that no control plane interaction between the positioning platform and wireless network nodes is needed.

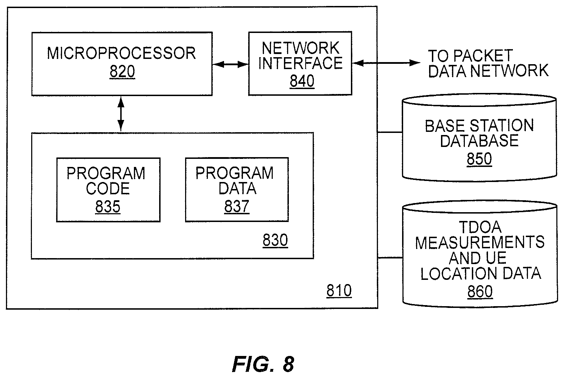

Figure 8 is a block diagram illustrating functional elements of a position-estimating node 810 according to some embodiments of the present invention. Although generally described herein in terms of a location server, those skilled in the art will appreciate that the base station position estimation techniques described herein are not limited to implementation on conventional server platforms. Indeed, the techniques described herein may also be adapted to and implemented in a wireless mobile station. Thus, the embodiment illustrated in Figure 8 is provided for illustrative purposes only, and is not intended to suggest that the inventive apparatus disclosed herein is limited to fixed platforms.

In any event, the illustrated position-estimating node 810 comprises processing circuits including one or more microprocessors 820, memory system 830, and network interface 840. Network interface 840 facilitates communication with mobile stations via a packet data network, so that TDOA measurement data and/or mobile station position data can be collected. Memory system 830, which may include several types of memory including RAM, ROM, Flash, magnetic and/or optical storage devices, and the like, is configured to store program code 835 as well as program data 837. Program code 835 comprises program instructions that, when executed by microprocessor(s) 820, configure the position-estimating node 810 to carry out one or more of the base station positioning estimating procedures discussed above.

For instance, program code 835 may comprise program instructions for obtaining a first set of time-difference-of-arrival (TDOA) measurement data from a first plurality of mobile stations, the first set of TDOA measurement data corresponding to transmissions received at the first plurality of mobile stations from the first base station transceiver node and a second base station transceiver node. The program instructions may further comprise instructions for obtaining first mobile station location data identifying a mobile station position corresponding to each TDOA measurement represented in the first set of TDOA measurement data, and computing an estimated position for the base station transceiver node as a function of the first mobile station location data and the first set of TDOA measurement data.

Also shown in Figure 8 are a base station position database 850 and a TDOA measurement and mobile station location database 860. These databases may be maintained in storage devices physically separate from position-estimating node 810 and accessible by wired or wireless network or point-to-point connections. Alternatively, all or part of either or both of these databases may be maintained within position-estimating node 810. Base station database 850 may be used, for example, to store estimated base station positions calculated according to the techniques described above. TDOA measurement and mobile station location database 860 is used to store TDOA measurements collected from mobile stations and the corresponding mobile station positions. In some embodiments, this may comprise an extensive database built over a significant period of time; in others, this database may simply comprise a set of TDOA measurements and associated mobile stations collected on-demand for the purpose of estimating a particular base station's position.

Those skilled in the art will appreciate a range of methods and apparatus for estimating the position of a base station transceiver node are described above. In some embodiments of the disclosed methods and apparatus, the estimated base station position is obtained using mobile station OTDOA measurements, but without any direct information from the wireless network operator. Once base station positions have been estimated using these techniques, an appropriately programmed location server can participate in mobile station positioning operations, using the reconstructed cell position data. Those skilled in the art will appreciate that this network independence is especially valuable for providing User Plane location services, such as those contemplated by OMA's SUPL specifications.

In the discussion above, various automatic procedures for mapping of base station positions have been disclosed. Corresponding apparatus, including an exemplary position-estimating node including processing circuits configured to carry out one or more of these procedures have been disclosed. Those skilled in the art will appreciate that still other embodiments of the invention may include computer-readable devices, such as a programmable flash memory, an optical or magnetic data storage device, or the like, encoded with computer program instructions which, when executed by an appropriate processing device, cause the processing device to carry out one or more of the techniques described herein for estimating the position of a base station transceiver node in a wireless communication network. Furthermore, while the techniques and apparatus described above may be particularly useful in connection with LTE networks, where OTDOA is a very important positioning method and is being standardized, those skilled in the art will appreciate that the inventive techniques and apparatus disclosed herein are not limited to LTE networks, and may be broadly applied to other wireless networks where mobile station TDOA measurements and corresponding mobile station positions are available.

Of course, those skilled in the art will recognize that the present invention may be carried out in other ways than those specifically set forth herein without departing from essential characteristics of the invention. The present embodiments are thus to be considered in all respects as illustrative and not restrictive, and all changes coming within the scope of the appended claims are intended to be embraced therein.

**Claims**

1. A method performed by a position-estimating node (810) for determining a position estimate for a first base station transceiver node in a wireless communication system, wherein the method comprises:

maintaining a database of time-difference-of-arrival, TDOA, measurements stored along with corresponding known positions for measuring mobile stations, wherein each TDOA measurement involves a pair of base station transceiver nodes, and wherein the database being built by performing a mobile station assisted observed time-difference-of-arrival, OTDOA, procedures in parallel or in sequence with A-GPS and / or GPS-based positioning requests;

evaluating (710) the database of TDOA measurements to identify a subset of TDOA measurements involving the first base station transceiver node, wherein the subset of TDOA measurements is taken within a time window of a predetermined duration;

evaluating the subset of TDOA measurements to identify a second base station transceiver node by determining (720) that the second base station transceiver node is involved in at least as many of the identified subset of TDOA measurements involving the first base station transceiver node as any other base station transceiver node;

computing (730) an estimated position for the first base station transceiver node as a function of the corresponding known positions for the measuring mobile stations and the measurements involving the second base station transceiver node of the subset of TDOA measurements involving the first base station transceiver node, wherein if no suitable subset of TDOA measurements meeting the time window of the predetermined duration is identified, sending positioning requests to several mobile stations in vicinity of the first base station transceiver node; and

storing (740) in a database of base station positions the estimated position for the first base station transceiver node.

**2.** The method of claim 1, further **characterized in that** the subset of TDOA measurements is obtained from at least five mobile stations, and **in that** computing (730) the estimated position for the first base station transceiver node comprises solving (530) a system of equations based on the corresponding known positions for the measuring mobile stations, the subset of TDOA measurements, and five unknown variables, wherein the five unknown variables comprise first and second coordinate values for the first base station transceiver node, first and second coordinate values for the second base station transceiver node, and a first real-time-difference value corresponding to a time offset between transmissions from the first and second base station transceiver nodes.

**3.** The method of claim 2, further **characterized in that** solving (530) the system of equations based on the corresponding known positions for the measuring mobile stations, the subset of TDOA measurements, and the five unknown variables comprises computing estimates for the five unknown variables using an iterative least squares algorithm.

**4.** The method of claim 1, further **characterized in that** the subset of TDOA measurements is obtained from at least four mobile stations, and **in that** computing (730) the estimated position for the first base station transceiver node comprises solving (640) a system of equations based on the corresponding known positions for the measuring mobile stations, the subset of TDOA measurements, a pre-determined real-time-difference value corresponding to a time offset between transmissions from the first and second base station transceiver nodes, and four unknown variables, the four unknown variables comprising first and second coordinate values for the first base station transceiver node and first and second coordinate values for the second base station transceiver node.

**5.** The method of claim 1, further **characterized in that** the subset of TDOA measurements is obtained from at least three mobile stations, and **in that** computing (730) the estimated position for the first base station transceiver node comprises solving a system of equations based on the corresponding known positions for the measuring mobile stations, the subset of TDOA measurements, a pre-determined known location for the second base station transceiver node, and three unknown variables, the three unknown variables comprising first and second coordinate values for the first base station transceiver node and a first real-time-difference value corresponding to a time offset between transmissions from the first and second base station transceiver nodes.

**6.** A position-estimating node (810) comprising one or more processing circuits (830), wherein the one or more processing circuits (830) are configured to:

maintain a database of time-difference-of-arrival, TDOA, measurements stored along with corresponding known positions for measuring mobile stations, wherein each TDOA measurement involves a pair of base station transceiver nodes, and wherein the database being built by performing a mobile station assisted observed time-difference-of-arrival, OTDOA, procedures in parallel or in sequence with A-GPS and / or GPS-based positioning requests;

evaluate the database (860) of TDOA measurements to identify a subset of TDOA measurements that involve the first base station transceiver node, wherein the subset of TDOA measurements is taken within a time window of a predetermined duration;

evaluate the subset of TDOA measurements to identify a second base station transceiver node by determining that the second base station transceiver node is involved in at least as many of the identified subset of TDOA measurements involving the first base station transceiver node as any other base station transceiver node;

compute an estimated position for the first base station transceiver node as a function of the corresponding known positions for the measuring mobile stations and the measurements involving the second base station transceiver node of the subset of TDOA measurements involving the first base station transceiver node,

wherein if no suitable subset of TDOA measurements meeting the time window of the predetermined duration is identified, send positioning requests to several mobile stations in vicinity of the first base station transceiver node; and

store in a database of base station positions the estimated position for the first base station transceiver node.

**7.** The position-estimating node (810) of claim 6, further **characterized in that** the one or more processing circuits (830) are configured to obtain the subset of TDOA measurements from at least five mobile stations, and are further configured to compute the estimated position for the first base station transceiver node by solving a system of equations based on the corresponding known positions for the measuring mobile stations, the subset of TDOA measurements, and five unknown variables, the five unknown variables comprising first and second coordinate values for the first base station transceiver node, first and second coordinate values for the second base station transceiver node, and a first real-time-difference value corresponding to a time offset between transmissions from the first and second base station transceiver nodes.

8. The position-estimating node (810) of claim 7, further **characterized in that** the one or more processing circuits (830) are configured to solve the system of equations based on the corresponding known positions for the measuring mobile stations, the subset of TDOA measurements, and the five unknown variables by computing estimates for the five unknown variables using an iterative least squares algorithm.

9. The position-estimating node (810) of claim 6, further **characterized in that** the one or more processing circuits (830) are configured to obtain the subset of TDOA measurements from at least four mobile stations, and are further configured to compute the estimated position for the first base station transceiver node by solving a system of equations based on the corresponding known positions for the measuring mobile stations, the subset of TDOA measurements, a pre-determined real-time-difference value corresponding to a time offset between transmissions from the first and second base station transceiver nodes, and four unknown variables, the four unknown variables comprising first and second coordinate values for the first base station transceiver node and first and second coordinate values for the second base station transceiver node.

10. The position-estimating node (810) of claim 6, further **characterized in that** the one or more processing circuits (830) are configured to obtain the subset of TDOA measurements from at least three mobile stations, and are further configured to compute the estimated position for the first base station transceiver node by solving a system of equations based on the corresponding known positions for the measuring mobile stations, the subset of TDOA measurements, a pre-determined known location for the second base station transceiver node, and three unknown variables, the three unknown variables comprising first and second coordinate values for the first base station transceiver node and a first real-time-difference value corresponding to a time offset between transmissions from the first and second base station transceiver nodes.

**Patentansprüche**

1. Verfahren, das von einem Positionsschätzknoten (810) zum Bestimmen einer Positionsschätzung für einen ersten Basisstations-Sendeempfängerknoten in einem drahtlosen Kommunikationssystem durchgeführt wird, wobei das Verfahren Folgendes umfasst:

Unterhalten einer Datenbank mit Ankunftszeitdifferenz-(Time-Difference-Of-Arrival, TDOA) Messungen, die zusammen mit entsprechenden bekannten Positionen für messende Mobilstationen gespeichert sind, wobei jede TDOA-Messung ein Paar von Basisstations-Sendeempfängerknoten umfasst, und wobei die Datenbank durch Durchführen von von einer Mobilstation unterstützten beobachteten Ankunftszeitdifferenz- (Observed Time-Difference-Of-Arrival, OTDOA) Prozeduren parallel oder nacheinander mit A-GPS- und/oder GPS-basierten Positionsbestimmungsanforderungen aufgebaut wird;
Auswerten (710) der Datenbank von TDOA-Messungen, um eine Teilmenge von TDOA-Messungen zu identifizieren, die den ersten Basisstations-Sendeempfängerknoten betreffen, wobei die Teilmenge von TDOA-Messungen innerhalb eines Zeitfensters einer vorbestimmten Dauer genommen wird;
Auswerten der Teilmenge von TDOA-Messungen, um einen zweiten Basisstations-Sendeempfängerknoten zu identifizieren durch Bestimmen (720), dass der zweite Basisstations-Sendeempfängerknoten an mindestens so vielen der identifizierten Teilmenge von TDOA-Messungen beteiligt ist, die den ersten Basisstations-Sendeempfängerknoten betreffen, wie jeder andere Basisstations-Sendeempfängerknoten;
Berechnen (730) einer geschätzten Position für den ersten Basisstations-Sendeempfängerknoten in Abhängigkeit von den entsprechenden bekannten Positionen für die messenden Mobilstationen und den Messungen, die den zweiten Basisstations-Sendeempfängerknoten der Teilmenge von TDOA-Messungen betreffen, die den ersten zweiten Basisstations-Sendeempfängerknoten betreffen,
wobei, wenn keine geeignete Untermenge von TDOA-Messungen identifiziert wird, die das Zeitfenster der vorbestimmten Dauer erfüllen, Senden von Positionsbestimmungsanfragen an mehrere Mobilstationen in der Nähe des ersten Basisstations-Sendeempfängerknotens; und
Speichern (740) in einer Datenbank von Basisstationspositionen der geschätzten Position für den ersten Basisstations-Sendeempfängerknoten.

2. Verfahren nach Anspruch 1, ferner **dadurch gekennzeichnet, dass** die Teilmenge von TDOA-Messungen von mindestens fünf Mobilstationen erhalten wird, und dass das Berechnen (730) der geschätzten Position für den ersten Basisstations-Sendeempfängerknoten das Lösen (530) eines Gleichungssystems basierend auf den entsprechenden bekannten Positionen für die messenden Mobilstationen, der Teilmenge von TDOA-Messungen und fünf unbekannten Variablen umfasst, wobei die fünf unbekannten Variablen erste und zweite Koordinatenwerte für den ersten Basisstations-Sendeempfängerknoten, erste und zweite Koordinatenwerte für den zweiten Basisstations-Sendeempfängerknoten und einen ersten Echtzeit-Differenzwert entsprechend einem Zeitversatz zwischen Übertragungen von den ersten und zweiten Basisstations-Sendeempfängerknoten umfassen.

3. Verfahren nach Anspruch 2, das ferner **dadurch gekennzeichnet ist, dass** das Lösen (530) des Gleichungssystems basierend auf den entsprechenden bekannten Positionen für die messenden Mobilstationen, der Teilmenge von TDOA-Messungen, und den fünf unbekannten Variablen das Berechnen von Schätzungen für die fünf unbekannten Variablen unter Verwendung eines iterativen Algorithmus der kleinsten Quadrate umfasst.

4. Verfahren nach Anspruch 1, ferner **dadurch gekennzeichnet, dass** die Teilmenge von TDOA-Messungen von mindestens vier Mobilstationen erhalten wird, und das Berechnen (730) der geschätzten Position für den ersten Basisstations-Sendeempfängerknoten das Lösen (640) eines Gleichungssystems basierend auf den entsprechenden bekannten Positionen für die messenden Mobilstationen, der Teilmenge von TDOA-Messungen, einem vorbestimmten Echtzeit-Differenzwert, der einem Zeitversatz zwischen Übertragungen von den ersten und zweiten Basisstations-Sendeempfängerknoten entspricht, und vier unbekannten Variablen, umfasst, wobei die vier unbekannten Variablen erste und zweite Koordinatenwerte für den ersten Basisstations-Sendeempfängerknoten und erste und zweite Koordinatenwerte für den zweiten Basisstations-Sendeempfängerknoten umfassen.

5. Verfahren nach Anspruch 1, ferner **dadurch gekennzeichnet, dass** die Teilmenge von TDOA-Messungen von mindestens drei Mobilstationen erhalten wird, und das Berechnen (730) der geschätzten Position für den ersten Basisstations-Sendeempfängerknoten das Lösen eines Gleichungssystems basierend auf den entsprechenden bekannten Positionen für die messenden Mobilstationen, der Teilmenge von TDOA-Messungen, einem vorbestimmten bekannten Standort für den zweiten Basisstations-Sendeempfängerknoten und drei unbekannten Variablen umfasst, wobei die drei unbekannten Variablen erste und zweite Koordinatenwerte für den ersten Basisstations-Sendeempfängerknoten und einen ersten Echtzeitdifferenzwert umfassen, der einem Zeitversatz zwischen Übertragungen von den ersten und zweiten Basisstations-Sendeempfängerknoten entspricht.

6. Positionsschätzknoten (810), der eine oder mehrere Verarbeitungsschaltungen (830) umfasst, wobei die eine oder mehreren Verarbeitungsschaltungen (830) für Folgendes konfiguriert sind:

Unterhalten einer Datenbank mit Ankunftszeitdifferenz-, TDOA, Messungen, die zusammen mit entsprechenden bekannten Positionen für messende Mobilstationen gespeichert sind, wobei jede TDOA-Messung ein Paar von Basisstations-Sendeempfängerknoten umfasst, und wobei die Datenbank durch Durchführen von von einer Mobilstation unterstützten beobachteten Ankunftszeitdifferenz-, OTDOA, Prozeduren parallel oder nacheinander mit A-GPS- und/oder GPS-basierten Positionsbestimmungsanforderungen aufgebaut wird;
Auswerten der Datenbank (860) von TDOA-Messungen, um eine Teilmenge von TDOA-Messungen zu identifizieren, die den ersten Basisstations-Sendeempfängerknoten betreffen, wobei die Teilmenge von TDOA-Messungen innerhalb eines Zeitfensters einer vorbestimmten Dauer genommen wird;
Auswerten der Teilmenge von TDOA-Messungen, um einen zweiten Basisstations-Sendeempfängerknoten zu identifizieren durch Bestimmen, dass der zweite Basisstations-Sendeempfängerknoten an mindestens so vielen der identifizierten Teilmenge von TDOA-Messungen beteiligt ist, die den ersten Basisstations-Sendeempfängerknoten betreffen, wie jeder andere Basisstations-Sendeempfängerknoten;
Berechnen einer geschätzten Position für den ersten Basisstations-Sendeempfängerknoten in Abhängigkeit von den entsprechenden bekannten Positionen für die messenden Mobilstationen und den Messungen, die den zweiten Basisstations-Sendeempfängerknoten der Teilmenge von TDOA-Messungen betreffen, die den ersten Basisstations-Sendeempfängerknoten betreffen,
wobei, wenn keine geeignete Untermenge von TDOA-Messungen identifiziert wird, die das Zeitfenster der vorbestimmten Dauer erfüllen, Senden von Positionsbestimmungsanfragen an mehrere Mobilstationen in der Nähe des ersten Basisstations-Sendeempfängerknotens; und
Speichern in einer Datenbank von Basisstationspositionen der geschätzten Position für den ersten Basisstations-Sendeempfängerknoten.

7. Positionsschätzknoten (810) nach Anspruch 6, der ferner **dadurch gekennzeichnet ist, dass** die eine oder mehreren Verarbeitungsschaltungen (830) dafür konfiguriert sind, die Teilmenge von TDOA-Messungen von mindestens fünf Mobilstationen zu erhalten, und ferner dafür konfiguriert sind, die geschätzte Position für den ersten Basisstations-Sendeempfängerknoten zu berechnen durch Lösen eines Gleichungssystems basierend auf den entsprechenden bekannten Positionen für die messenden Mobilstationen, der Teilmenge der TDOA-Messungen, und fünf unbekannten Variablen, wobei die fünf unbekannten Variablen erste und zweite Koordinatenwerte für den ersten Basisstations-Sendeempfängerknoten, erste und zweite Koordinatenwerte für den zweiten Basisstations-Sendeempfängerknoten und einen ersten Echtzeit-Differenzwert entsprechend einem Zeitversatz zwischen Übertragungen von den ersten und zweiten Basisstations-Sendeempfängerknoten umfassen.

8. Positionsschätzknoten (810) nach Anspruch 7, ferner **dadurch gekennzeichnet, dass** die eine oder mehreren Verarbeitungsschaltungen (830) dafür konfiguriert sind, das Gleichungssystem basierend auf den entsprechenden bekannten Positionen für die messenden Mobilstationen, der Teilmenge von TDOA-Messungen und den fünf unbekannten Variablen zu lösen durch Berechnen von Schätzungen für die fünf unbekannten Variablen unter Verwendung eines iterativen Algorithmus der kleinsten Quadrate.

9. Positionsschätzknoten (810) nach Anspruch 6, der ferner **dadurch gekennzeichnet ist, dass** die eine oder mehreren Verarbeitungsschaltungen (830) dafür konfiguriert sind, die Teilmenge von TDOA-Messungen von mindestens vier Mobilstationen zu erhalten, und ferner dafür konfiguriert sind, die geschätzte Position für den ersten Basisstations-Sendeempfängerknoten zu berechnen durch Lösen eines Gleichungssystems basierend auf den entsprechenden bekannten Positionen für die messenden Mobilstationen, der Teilmenge der TDOA-Messungen, einem vorbestimmten Echtzeit-Differenzwert entsprechend einem Zeitversatz zwischen Übertragungen von den ersten und zweiten Basisstations-Sendeempfängerknoten und vier unbekannten Variablen, wobei die vier unbekannten Variablen erste und zweite Koordinatenwerte für den ersten Basisstations-Sendeempfängerknoten und erste und zweite Koordinatenwerte für den zweiten Basisstations-Sendeempfängerknoten umfassen.

10. Positionsschätzknoten (810) nach Anspruch 6, der ferner **dadurch gekennzeichnet ist, dass** die eine oder mehreren Verarbeitungsschaltungen (830) dafür konfiguriert sind, die Teilmenge von TDOA-Messungen von mindestens drei Mobilstationen zu erhalten, und ferner dafür konfiguriert sind, die geschätzte Position für den ersten Basisstations-Sendeempfängerknoten zu berechnen durch Lösen eines Gleichungssystems basierend auf den entsprechenden bekannten Positionen für die messenden Mobilstationen, der Teilmenge der TDOA-Messungen, einem vorbestimmten bekannten Standort für den zweiten Basisstations-Sendeempfängerknoten und drei unbekannten Variablen, wobei die drei unbekannten Variablen erste und zweite Koordinatenwerte für den ersten Basisstations-Sendeempfängerknoten und einen ersten Echtzeitdifferenzwert umfassen, der einem Zeitversatz zwischen Übertragungen von den ersten und zweiten Basisstations-Sendeempfängerknoten entspricht.

**Revendications**

1. Procédé exécuté par un nœud d'estimation de position (810) pour déterminer une estimation de position pour un premier nœud émetteur-récepteur de station de base dans un système de communication sans fil, dans lequel le procédé comprend :

le maintien d'une base de données de mesures de différence de temps d'arrivée, TDOA, stockées avec des positions connues correspondantes pour des stations mobiles de mesure, dans lequel chaque mesure TDOA implique une paire de nœuds émetteurs-récepteurs de stations de base, et dans lequel la base de données est construite en effectuant des procédures de différence de temps d'arrivée observée assistée par une station mobile, OTDOA, en parallèle ou en séquence avec les requêtes de positionnement A-GPS et/ou GPS ;
l'évaluation (710) de la base de données de mesures TDOA pour identifier un sous-ensemble de mesures TDOA impliquant le premier nœud émetteur-récepteur de station de base, le sous-ensemble de mesures TDOA étant pris dans une fenêtre temporelle d'une durée prédéterminée ;
l'évaluation du sous-ensemble de mesures TDOA pour identifier un deuxième nœud émetteur-récepteur de station de base en déterminant (720) que le deuxième nœud émetteur-récepteur de station de base est impliqué dans au moins autant du sous-ensemble identifié de mesures TDOA impliquant le premier nœud émetteur-récepteur de station de base que tout autre nœud émetteur-récepteur de station de base ;
le calcul (730) d'une position estimée pour le premier nœud émetteur-récepteur de station de base en fonction des positions connues correspondantes pour les stations mobiles de mesure et les mesures impliquant le deuxième nœud émetteur-récepteur de station de base du sous-ensemble de mesures TDOA impliquant le premier nœud émetteur-récepteur de station de base,
dans lequel si aucun sous-ensemble approprié de mesures TDOA répondant à la fenêtre temporelle de la durée prédéterminée n'est identifié, l'envoi des requêtes de positionnement à plusieurs stations mobiles à proximité du premier nœud émetteur-récepteur de station de base ; et

le stockage (740) dans une base de données de positions de station de base de la position estimée pour le premier nœud émetteur-récepteur de station de base.

2. Procédé selon la revendication 1, **caractérisé en outre en ce que** le sous-ensemble de mesures TDOA est obtenu à partir d'au moins cinq stations mobiles, et **en ce que** le calcul (730) de la position estimée pour le premier nœud émetteur-récepteur de station de base comprend la résolution (530) d'un système d'équations basées sur les positions connues correspondantes pour les stations mobiles de mesure, le sous-ensemble de mesures TDOA et cinq variables inconnues, dans lequel les cinq variables inconnues comprenant des première et deuxième valeurs de coordonnées pour le premier nœud émetteur-récepteur de station de base, des première et deuxième valeurs de coordonnées pour le deuxième nœud émetteur-récepteur de station de base, et une première valeur de différence en temps réel correspondant à un décalage temporel entre les transmissions provenant des premier et deuxième nœuds émetteur-récepteur de station de base.

3. Procédé selon la revendication 2, **caractérisé en outre en ce que** la résolution (530) du système d'équations basé sur les positions connues correspondantes pour les stations mobiles de mesure, le sous-ensemble de mesures TDOA, et les cinq variables inconnues comprend le calcul d'estimations pour les cinq inconnues variables à l'aide d'un algorithme des moindres carrés itératif.

4. Procédé selon la revendication 1, **caractérisé en outre en ce que** le sous-ensemble de mesures TDOA est obtenu à partir d'au moins quatre stations mobiles, et **en ce que** le calcul (730) de la position estimée pour le premier nœud émetteur-récepteur de station de base comprend la résolution (640) d'un système d'équations basées sur les positions connues correspondantes pour les stations mobiles de mesure, le sous-ensemble de mesures TDOA, une valeur de différence en temps réel prédéterminée correspondant à un décalage temporel entre les transmissions provenant des premier et deuxième nœuds émetteurs-récepteurs de station de base, et quatre variables, les quatre variables inconnues comprenant des première et deuxième valeurs de coordonnées pour le premier nœud émetteur-récepteur de station de base et des première et deuxième valeurs de coordonnées pour le deuxième nœud émetteur-récepteur de station de base.

5. Procédé selon la revendication 1, **caractérisé en outre en ce que** le sous-ensemble de mesures TDOA est obtenu à partir d'au moins trois stations mobiles, et **en ce que** le calcul (730) de la position estimée pour le premier nœud émetteur-récepteur de station de base comprend la résolution d'un système d'équations basé sur les positions connues correspondantes pour les stations mobiles de mesure, le sous-ensemble de mesures TDOA, un emplacement connu prédéterminé pour le deuxième nœud émetteur-récepteur de station de base, et trois variables inconnues, les trois variables inconnues comprenant des première et deuxième valeurs de coordonnées pour le premier nœud émetteur-récepteur de station de base et une première valeur de différence en temps réel correspondant à un décalage temporel entre les transmissions provenant des premier et deuxième nœuds émetteurs-récepteurs de station de base.

6. Nœud d'estimation de position (810) comprenant un ou plusieurs circuits de traitement (830), dans lequel l'un ou plusieurs circuits de traitement (830) sont configurés pour :

maintenir une base de données de mesures de différence de temps d'arrivée, TDOA, stockées ainsi que des positions connues correspondantes pour des stations mobiles de mesure, dans lequel chaque mesure TDOA implique une paire de nœuds émetteurs-récepteurs de stations de base, et dans lequel la base de données est construite en effectuant des procédures de différence de temps d'arrivée observée assistée par une station mobile, OTDOA, en parallèle ou en séquence avec les requêtes de positionnement A-GPS et/ou GPS ;
évaluer la base de données (860) de mesures TDOA pour identifier un sous-ensemble de mesures TDOA qui implique le premier nœud émetteur-récepteur de station de base, le sous-ensemble de mesures TDOA étant pris dans une fenêtre temporelle d'une durée prédéterminée ;
évaluer le sous-ensemble de mesures TDOA pour identifier un deuxième nœud émetteur-récepteur de station de base en déterminant que le deuxième nœud émetteur-récepteur de station de base est impliqué dans au moins autant du sous-ensemble identifié de mesures TDOA impliquant le premier nœud émetteur-récepteur de station de base que tout autre nœud émetteur-récepteur de station de base ;
calculer une position estimée pour le premier nœud émetteur-récepteur de station de base en fonction des positions connues correspondantes pour les stations mobiles de mesure et les mesures impliquant le deuxième nœud émetteur-récepteur de station de base du sous-ensemble de mesures TDOA impliquant le premier nœud émetteur-récepteur de station de base,
dans lequel si aucun sous-ensemble approprié de mesures TDOA répondant à la fenêtre temporelle de durée prédéterminée n'est identifié, envoyer des requêtes de positionnement à plusieurs stations mobiles à proximité du premier nœud émetteur-récepteur de station de base ; et

stocker dans une base de données de positions de station de base la position estimée pour le premier nœud émetteur-récepteur de station de base.

7. Nœud d'estimation de position (810) selon la revendication 6, **caractérisé en outre en ce que** l'un ou plusieurs circuits de traitement (830) sont configurés pour obtenir le sous-ensemble de mesures TDOA à partir d'au moins cinq stations mobiles, et sont en outre configurés pour calculer la position estimée pour le premier nœud émetteur-récepteur de station de base en résolvant un système d'équations basé sur les positions connues correspondantes pour les stations mobiles de mesure, le sous-ensemble de mesures TDOA, et cinq variables inconnues, les cinq variables inconnues comprenant des première et deuxième valeurs de coordonnées pour le premier nœud émetteur-récepteur de station de base, des première et deuxième valeurs de coordonnées pour le deuxième nœud émetteur-récepteur de station de base, et une première valeur de différence en temps réel correspondant à un décalage temporel entre les transmissions provenant des premier et deuxième nœuds émetteur-récepteur de station de base.

8. Nœud d'estimation de position (810) selon la revendication 7, **caractérisé en outre en ce que** l'un ou plusieurs circuits de traitement (830) sont configurés pour résoudre le système d'équations basé sur les positions connues correspondantes pour les stations mobiles de mesure, le sous-ensemble de mesures TDOA et les cinq variables inconnues en calculant des estimations pour les cinq variables inconnues à l'aide d'un algorithme des moindres carrés itératif.

9. Nœud d'estimation de position (810) selon la revendication 6, **caractérisé en outre en ce que** l'un ou plusieurs circuits de traitement (830) sont configurés pour obtenir le sous-ensemble de mesures TDOA à partir d'au moins quatre stations mobiles, et sont en outre configurés pour calculer la position estimée pour le premier nœud émetteur-récepteur de station de base en résolvant un système d'équations basé sur les positions connues correspondantes pour les stations mobiles de mesure, le sous-ensemble de mesures TDOA, une valeur de différence en temps réel prédéterminée correspondant à un décalage temporel entre les transmissions provenant des premier et deuxième nœuds émetteurs-récepteurs de station de base, et quatre variables inconnues, les quatre variables inconnues comprenant des première et deuxième valeurs de coordonnées pour le premier nœud émetteur-récepteur de station de base et des première et deuxième valeurs de coordonnées pour le deuxième nœud émetteur-récepteur de station de base.

10. Nœud d'estimation de position (810) selon la revendication 6, **caractérisé en outre en ce que** l'un ou plusieurs circuits de traitement (830) sont configurés pour obtenir le sous-ensemble de mesures TDOA à partir d'au moins trois stations mobiles, et sont en outre configurés pour calculer la position estimée pour le premier nœud émetteur-récepteur de station de base en résolvant un système d'équations basé sur les positions connues correspondantes pour les stations mobiles de mesure, le sous-ensemble de mesures TDOA, un emplacement connu prédéterminé pour le deuxième nœud émetteur-récepteur de station de base, et trois variables inconnues, les trois variables inconnues comprenant des première et deuxième valeurs de coordonnées pour le premier nœud émetteur-récepteur de station de base et une première valeur de différence en temps réel correspondant à un décalage temporel entre les transmissions provenant des premier et deuxième nœuds émetteur-récepteur de station de base.

FIG. 1

FIG. 2

**FIG. 3**

EP 2 449 834 B1

```
┌─────────────────────────────────────────────────────────────┐
│   OBTAIN TDOA DATA FROM GROUP OF MOBILE STATIONS            │── 410
│   FOR TRANSMISSIONS FROM 1ST AND 2ND BASE STATIONS          │
└─────────────────────────────────────────────────────────────┘
                              │
                              ▼
┌─────────────────────────────────────────────────────────────┐
│            OBTAIN MOBILE STATION LOCATION DATA              │── 420
└─────────────────────────────────────────────────────────────┘
                              │
                              ▼
┌─────────────────────────────────────────────────────────────┐
│  COMPUTE ESTIMATED POSITION FOR 1ST BASE STATION BASED      │── 430
│  ON MOBILE STATION LOCATION DATA AND TDOA DATA              │
└─────────────────────────────────────────────────────────────┘
```

## FIG. 4

```
┌─────────────────────────────────────────────────────────────┐
│   OBTAIN TDOA DATA FROM 5 OR MORE MOBILE STATIONS          │── 510
│   FOR TRANSMISSIONS FROM 1ST AND 2ND BASE STATIONS          │
└─────────────────────────────────────────────────────────────┘
                              │
                              ▼
┌─────────────────────────────────────────────────────────────┐
│            OBTAIN MOBILE STATION LOCATION DATA              │── 520
└─────────────────────────────────────────────────────────────┘
                              │
                              ▼
┌─────────────────────────────────────────────────────────────┐
│   SOLVE SYSTEM OF EQUATIONS WITH 5 UNKNOWNS:               │── 530
│   COORDINATES FOR 1ST BASE STATION, COORDINATES            │
│   FOR 2ND BASE STATION, AND REAL-TIME-DIFFERENCE           │
└─────────────────────────────────────────────────────────────┘
                              │
                              ▼
┌─────────────────────────────────────────────────────────────┐
│   OBTAIN TDOA DATA FROM 3 OR MORE MOBILE STATIONS          │── 540
│   FOR TRANSMISSIONS FROM 1ST AND 3RD BASE STATIONS          │
└─────────────────────────────────────────────────────────────┘
                              │
                              ▼
┌─────────────────────────────────────────────────────────────┐
│   SOLVE SYSTEM OF EQUATIONS WITH 3 UNKNOWNS:               │── 550
│   COORDINATES FOR 3RD BASE STATION AND REAL-TIME-DIFFERENCE │
└─────────────────────────────────────────────────────────────┘
```

## FIG. 5

```
┌─────────────────────────────────────────────────────────────┐  ╱─ 610
│        OBTAIN TDOA DATA FROM 4 OR MORE MOBILE STATIONS        │
│      FOR TRANSMISSIONS FROM 1ST AND 2ND BASE STATIONS         │
└─────────────────────────────────────────────────────────────┘
                              │
                              ▼
┌─────────────────────────────────────────────────────────────┐  ╱─ 620
│              OBTAIN MOBILE STATION LOCATION DATA              │
└─────────────────────────────────────────────────────────────┘
                              │
                              ▼
┌─────────────────────────────────────────────────────────────┐  ╱─ 630
│               OBTAIN REAL-TIME DIFFERENCE DATA               │
└─────────────────────────────────────────────────────────────┘
                              │
                              ▼
┌─────────────────────────────────────────────────────────────┐  ╱─ 640
│       SOLVE SYSTEM OF EQUATIONS WITH 4 UNKNOWNS:             │
│           COORDINATES FOR 1ST BASE STATION AND               │
│           COORDINATES FOR 2ND BASE STATION                   │
└─────────────────────────────────────────────────────────────┘
```

**FIG. 6**

```
┌─────────────────────────────────────────────────────────────┐  ╱─ 710
│            IDENTIFY FIRST SUBSET OF TDOA DATA                │
│               THAT INVOLVES 1ST BASE STATION                 │
└─────────────────────────────────────────────────────────────┘
                              │
                              ▼
┌─────────────────────────────────────────────────────────────┐  ╱─ 720
│            DETERMINE WHICH 2ND BASE STATION                  │
│              IN GREATEST NUMBER OF FIRST SUBSET              │
└─────────────────────────────────────────────────────────────┘
                              │
                              ▼
┌─────────────────────────────────────────────────────────────┐  ╱─ 730
│         USE TDOA DATA INVOLVING 1ST AND 2ND BASE            │
└─────────────────────────────────────────────────────────────┘
                              │
                              ▼
┌─────────────────────────────────────────────────────────────┐  ╱─ 740
│          UPDATE LOCATION SERVER DATABASE WITH               │
│            ESTIMATED 1ST BASE STATION POSITION               │
└─────────────────────────────────────────────────────────────┘
```

**FIG. 7**

MICROPROCESSOR
820

NETWORK
INTERFACE
840

TO PACKET
DATA NETWORK

PROGRAM
CODE
835

PROGRAM
DATA
837

830

810

BASE STATION
DATABASE
850

TDOA
MEASUREMENTS
AND UE
LOCATION DATA
860

*FIG. 8*

**FIG. 9**

**FIG. 10**

EP 2 449 834 B1

**EP 2 449 834 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007056738 A2
- US 2006009235 A1
- US 2009131075 A1
- US 48635009